# DEMANDE DE BREVET EUROPEEN

(11) **EP 3 618 057 A1**
(43) Date de publication de la demande: **04.03.2020**
(21) Numéro de dépôt: 19193417.3
(22) Date de dépôt: 23.08.2019
(51) Int. Cl.: G10K 11/172, F02K 1/34, F02K 1/82

(54) **STRUCTURE ABSORBANTE DE SONS BASSES FREQUENCES POUR UNE TUYERE PRIMAIRE D'UNE TURBOMACHINE D'UN AERONEF**

(30) Priorité: 29.08.2018 FR 1857771
(71) Demandeur: Airbus Operations (S.A.S.), 31060 Toulouse Cedex 9 (FR)
(72) Inventeur: BOUCHET, Eric, 31840 AUSSONNE (FR); CAZEAUX, Laurent, 31170 TOURNEFEUILLE (FR); GACHES, Thierry, 31620 CASTELNAU D'ESTRETEFONDS (FR); KASSEM, Morad, 31300 TOULOUSE (FR); MAFFRE, Claire, 32600 LIAS (FR)
(74) Mandataire: Cabinet Le Guen Maillet

(57) **Abrégé**

L'invention concerne une structure absorbante (30) qui absorbe les sons basses fréquences et qui comporte une peau (32) perforée d'orifices (20), au moins un caisson (36) présentant deux parois latérales (44a-b) ayant une forme de bande délimitant entre elles une ouverture et un fond (42) opposé à l'ouverture et reliant les deux parois latérales (44a-b), où les parois latérales (44a-b) se rapprochent en progressant de l'ouverture vers le fond (42), ledit caisson (36) étant fixé à la peau (32) avec l'ouverture contre la peau (32), chaque paroi latérale (44a-b) s'étendant en largeur entre l'ouverture et le fond (42), et pour chaque caisson (36), deux languettes (40a-b) disposées dans ledit caisson (36), , où chaque languette (40a-b) a une forme de bande s'étendant en longueur sur la totalité d'une longueur du caisson et en largeur entre l'ouverture et le fond (42) du caisson (36), et où chaque languette (40a-b) présente une première extrémité fixée le long d'un bord de l'ouverture et une deuxième extrémité libre qui s'étend vers le fond (42) en se rapprochant de la deuxième extrémité de l'autre languette (40b-a), où chaque languette (40b-a) prend une forme arquée entre la première extrémité et la deuxième extrémité.

Une telle structure absorbante est facile à mettre en oeuvre et absorbe les bruits basses fréquences.

## Description

### DOMAINE TECHNIQUE

La présente invention concerne une structure absorbante de sons basses fréquences pour absorber des sons basses fréquences d'une tuyère primaire d'une turbomachine d'un aéronef, une tuyère primaire d'un conduit d'éjection primaire d'une turbomachine, une turbomachine comprenant une telle tuyère primaire, ainsi qu'un aéronef comportant une telle turbomachine.

### ETAT DE LA TECHNIQUE ANTERIEURE

Une turbomachine double flux d'un aéronef comprend un conduit d'éjection primaire par lequel sont évacués les gaz brûlés. Le conduit d'éjection primaire est délimité à l'extérieur par une tuyère primaire et à l'intérieur par une structure interne (appelée « plug » en Anglais). A l'arrière de la structure interne est fixé un cône de tuyère.

Le conduit d'éjection primaire est donc délimité par une peau de la tuyère primaire et une peau de la structure interne qui sont en contact avec le flux de gaz brûlé en provenance du moteur.

Les sons de basses fréquences (entre 500 Hz et 1000 Hz : notamment ceux liés à la combustion), émis par la turbomachine forment une importante source de bruit pour l'environnement.

Il est connu, pour atténuer ces bruits, d'équiper la tuyère primaire et/ou la structure interne avec une structure absorbante de sons basses fréquences.

On connaît du document brevet US2013186707, une structure absorbante qui comprend une structure en nid d'abeilles fixée entre deux panneaux dont un qui est perforé et forme la peau en contact avec le flux de gaz brûlé. La structure en nid d'abeilles comprend des alvéoles dans chacun desquelles est arrangé un élément en forme d'entonnoir s'évasant en direction du panneau perforé.

La structure absorbante ainsi formée est performante du point de vue acoustique, puisque basée sur le même principe qu'un résonateur de Helmholtz et qu'un résonateur quart d'onde, elle permet d'atténuer efficacement les sons basses fréquences émis par la turbomachine.

Des observations montrent que la fréquence minimale des sons de basses fréquences émis par une turbomachine diminue à mesure que le taux de dilution de la turbomachine est élevé.

Pour être en mesure d'absorber les sons sur une large bande de fréquences, comprenant les sons de plus hautes et de plus basses fréquences émis par les turbomachines à haut taux de dilution (par exemple 15 :1), il est nécessaire d'augmenter l'épaisseur de la structure en nid d'abeilles et donc son poids. Cette augmentation de poids implique, dans le cas où la structure absorbante équipe un dispositif de grandes dimensions comme la tuyère primaire et/ou la structure interne, de renforcer mécaniquement la structure absorbante, et donc de l'alourdir, Cette augmentation n'est pas souhaitable compte tenu du besoin récurrent en aéronautique de diminuer les masses des systèmes embarqués.

Il est donc nécessaire de trouver une architecture de structure absorbante de sons basses fréquences qui soit performante pour absorber les sons sur une large bande de fréquences, en étant moins encombrante et par conséquent moins lourde.

### EXPOSE DE L'INVENTION

L'invention vise à répondre en tout ou partie au besoin susmentionné et concerne une structure absorbante telle que revendiquée à la revendication 1.

Une telle structure absorbante est basée sur le même principe qu'un résonateur de Helmholtz et qu'un résonateur quart d'onde, et permet notamment d'atténuer efficacement les sons basses fréquences émis par la turbomachine. L'épaisseur de la structure absorbante peut être augmentée pour élargir la bande de fréquences des sons atténués. Puisque la structure absorbante est auto-raidie, une augmentation de l'épaisseur de la structure absorbante n'exige pas de rajouter des éléments de renforts pour renforcer l'intégrité mécanique de la structure absorbante.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
la Fig. 1 est une vue de côté d'un aéronef comprenant une turbomachine équipée d'une structure absorbante de sons basses fréquences selon l'invention,
la Fig. 2 est une vue en perspective d'un conduit d'éjection primaire,
la Fig. 3 est une vue en perspective de la structure absorbante de sons basses fréquences selon l'invention,
la Fig. 4 est une vue en coupe d'une structure absorbante de sons basses fréquences selon l'invention, et
la Fig. 5 est une vue en perspective de la structure absorbante de sons basses fréquences arrangée sur un conduit d'éjection primaire selon l'invention et qui correspond à une coupe par un plan axial P de la Fig. 2.

### EXPOSE DETAILLE DE MODES DE REALISATION

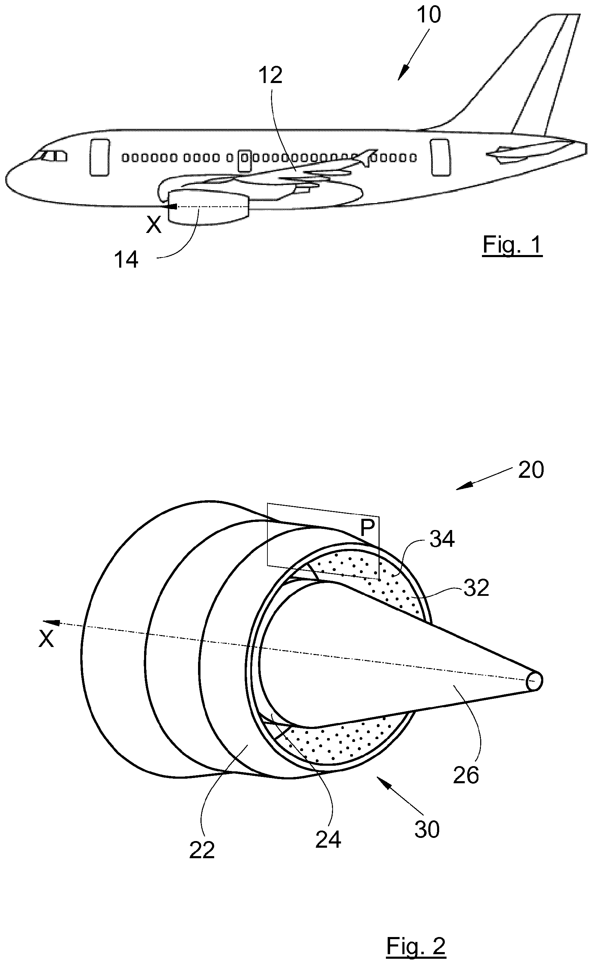

La Fig. 1 montre un aéronef 10 qui comporte une aile 12 sous laquelle est fixée une nacelle 14 dans laquelle est logée une turbomachine qui présente, à l'arrière, un conduit d'éjection primaire. La Fig. 2 montre le conduit d'éjection primaire 20 qui permet aux gaz brûlés par la turbomachine de s'échapper et qui présente un axe longitudinal X parallèle à la direction longitudinale de l'aéronef 10 et de la turbomachine.

Le conduit d'éjection primaire 20 est délimité à l'extérieur par une tuyère primaire 22 et à l'intérieur par une structure interne 24. A l'arrière de la structure interne 24 est fixé un cône de tuyère 26.

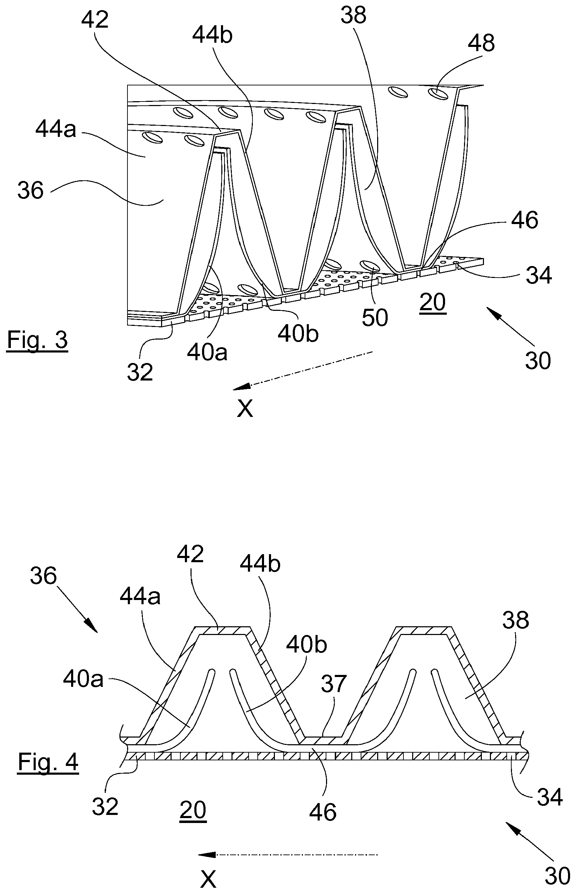

En relation avec les Figs. 3 à 5, la tuyère primaire 22 comporte une structure absorbante 30 des sons émis par la turbomachine qui absorbe notamment les sons basses fréquences. La tuyère primaire 22 et la structure interne 24 présentent le même axe longitudinal X.

Dans la suite de la description, la structure absorbante 30 est décrite comme disposée dans la tuyère primaire 22, mais elle peut être mise en place dans la structure interne 24 ou toute autre partie de la turbomachine ou de la nacelle 14 le long de laquelle s'écoule un flux d'air et où des sons doivent être absorbés.

La structure absorbante 30 comporte une peau 32 qui forme la surface de la tuyère primaire 22 qui délimite le conduit d'éjection primaire 20. La peau 32 est perforée pour laisser le passage aux ondes sonores à atténuer. La peau 32 présente ainsi une pluralité d'orifices 34 traversants. L'air peut donc circuler à travers ces orifices 34. Dans le cadre d'une implantation dans un conduit d'éjection primaire 20, la peau 32 prend la forme d'un cylindre coaxial avec l'axe longitudinal X.

La structure absorbante 30 comporte également au moins un caisson 36 fixé à la peau 32 du côté opposé au conduit d'éjection primaire 20 par rapport à la peau 32. Chaque caisson 36 étant constitué de parois, où lesdites parois et la peau 32 délimitent un volume 38 ouvert sur l'extérieur par les orifices 34. Chaque caisson 36 présente ainsi une ouverture qui s'applique contre la peau 32 et un fond 42 qui est opposé à l'ouverture. Le caisson 36 comprend en outre deux parois latérales 44a-b, de dimensions identiques et arrangées en regard l'une de l'autre. Chaque paroi latérale 44a-b a une forme de bande (c'est à dire une forme plus longue que large) s'étendant en largeur entre l'ouverture et le fond 42. Les parois latérales 44a-b délimitent entre elles l'ouverture. Le fond 42 relie les deux parois latérales 44a-b entre elles.

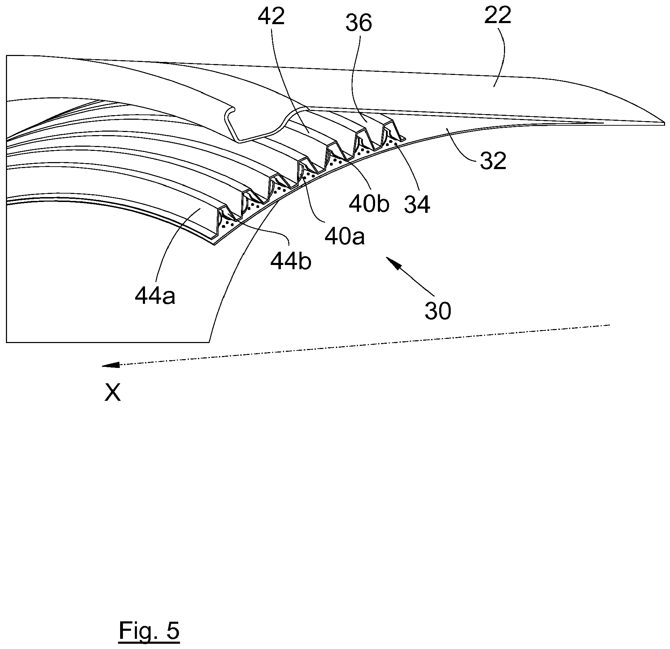

Dans le cadre d'une implantation dans un conduit d'éjection primaire 20, et plus particulièrement visible à la Fig. 5, chaque caisson 36 est de révolution et prend la forme d'une couronne coaxiale avec l'axe longitudinal X du conduit d'éjection primaire 20 où l'ouverture est orientée vers l'axe longitudinal X. Chaque caisson 36 s'étend alors en longueur le long du périmètre/circonférence du conduit d'éjection primaire 20. Lorsqu'il y en a plusieurs, les caissons 36 sont disposés les uns à la suite des autres parallèlement à l'axe longitudinal X.

Chaque caisson 36 présente un profil en trapèze, c'est-à-dire un profil qui se rétrécie depuis l'ouverture vers le fond 42 du caisson 36. Les parois latérales 44a-b se rapprochent donc en progressant de l'ouverture vers le fond 42.

La structure absorbante 30 comporte également dans chaque caisson 36, deux languettes 40a-b. Plus particulièrement visible à la Fig. 5, chaque languette 40b-a a une forme de bande s'étendant en longueur sur une longueur égale à celle des parois latérales 44a-b du caisson 36. Ainsi pour un caisson 36 s'étendant en longueur le long du périmètre/circonférence du conduit d'éjection primaire 20, chaque languette 40b-a s'étend également en longueur le long du périmètre/circonférence du conduit d'éjection primaire 20.

Vu en coupe, chaque languette 40a-b s'étend en largeur sur la hauteur du caisson 36, c'est à dire entre l'ouverture et le fond 42. A cette fin, chaque languette 40a-b présente une première extrémité fixée le long d'un bord de l'ouverture et une deuxième extrémité libre qui s'étend vers le fond 42 en se rapprochant de la deuxième extrémité de l'autre languette 40b-a. Chaque première extrémité est ainsi fixée le long d'une paroi latérale 44a-b.

Chaque languette 40b-a prend une forme arquée entre la première extrémité et la deuxième extrémité et la forme bombée de chaque languette 40b-a créée par sa forme arquée est orientée vers la forme bombée de l'autre languette 40a-b. Les deux languettes 40a-b restent à distance l'une de l'autre afin de ménager un espace entre elles.

Les deux languettes 40a-b vont agir comme un résonateur quart d'onde et absorber les ondes dont les fréquences sont comprises entre 200 Hz et 600 Hz et l'espace entre les languettes 40a-b et le caisson 36 va agir comme un résonateur de Helmholtz et absorber les ondes dont les fréquences sont comprises entre 900 Hz et 4000 Hz.

Une telle structure absorbante 30 peut par conséquent absorber deux types de fréquences acoustiques dont les sons basses fréquences. En outre, la structure absorbante 30 est auto-raidie puisque les caissons 36 se comportent comme des raidisseurs structuraux et viennent renforcer l'intégrité structurelle de la structure.

En référence avec la Fig.4, la structure absorbante 30 comprend un premier et un second caissons 36 disposés l'un à côté de l'autre et solidarisés l'un à l'autre par une jonction 37 arrangée entre les deux caissons 36. Une languette 40a-b associée au premier caisson 36 prolonge la languette 40b-a associée au second caisson 36 par une partie centrale 46 qui est solidaire des deux languettes 40a-b et passe entre les deux caissons 36 en étant enserrée entre la peau 32 et la jonction 37. Dans ce cas, la fixation est assurée par serrage des caissons 36 et de la peau 32.

Afin d'évacuer les fluides qui pourraient stagner dans les caissons 36, chaque caisson 36 présente des trous 48 au voisinage du fond 42 et les languettes 40a-b présentent des trous 50 au voisinage de l'ouverture.

En complément de la forme de révolution, ces trous 48 et 50 permettent l'évacuation des fluides par le bas.

Différents types de matériaux peuvent être utilisés pour réaliser la peau 32, les caissons 36 et les languettes 40a-b, comme par exemple du métal comme l'aluminium ou le titane ou des matériaux composites.

Selon les matériaux utilisés, la fixation des éléments de la structure absorbante 30 entre eux peut être réalisée par exemple par soudage, collage ou vissage. Par conséquent, la structure absorbante 30 est facile à fabriquer et à mettre en oeuvre.

## Revendications

1. Structure absorbante (30) pour l'absorption de sons basses fréquences et qui comporte :
- une peau (32) perforée d'orifices (20),
- au moins un caisson (36) présentant deux parois latérales (44a-b) de dimensions identiques, les parois latérales (44a-b) ayant une forme de bande et étant arrangées en regard l'une de l'autre et délimitant entre elles une ouverture et un fond (42) opposé à l'ouverture et reliant les deux parois latérales (44a-b), où les parois latérales (44a-b) se rapprochent en progressant de l'ouverture vers le fond (42), ledit caisson (36) étant fixé à la peau (32) avec l'ouverture contre la peau (32), et où chaque paroi latérale (44a-b) s'étend en largeur entre l'ouverture et le fond (42), et
- pour chaque caisson (36), deux languettes (40a-b) disposées dans ledit caisson (36), où chaque languette (40a-b) a une forme de bande s'étendant en longueur sur une longueur égale à celle des parois latérales (44a-b) du caisson (36), où chaque languette (40a-b) s'étend en largeur entre l'ouverture et le fond (42) du caisson (36) et présente une première extrémité fixée le long d'un bord de l'ouverture et une deuxième extrémité libre qui s'étend vers le fond (42) en se rapprochant de la deuxième extrémité de l'autre languette (40b-a), où chaque languette (40b-a) prend une forme arquée entre la première extrémité et la deuxième extrémité.

2. Structure absorbante (30) selon la revendication 1, **caractérisée en ce qu'**elle comprend un premier et un second caissons (36) arrangés l'un à côté de l'autre et solidarisés l'un à l'autre par une jonction (37) arrangées entre les deux caissons (36), et **en ce qu'**une languette (40a-b) associée au premier caisson (36) prolonge la languette (40b-a) associée au second caisson (36) par une partie centrale (46) qui est solidaire des deux languettes (40a-b) et est enserrée entre la jonction (37) et la peau (32).

3. Tuyère primaire (22) d'un conduit d'éjection primaire (20) d'une turbomachine, ladite tuyère d'éjection primaire (22) présentant un axe longitudinal X, et une structure absorbante (30) selon l'une des revendications 1 ou 2, où la peau (32) prend la forme d'un cylindre coaxial avec l'axe longitudinal X et forme la surface de la tuyère primaire (22) qui délimite le conduit d'éjection primaire (20), et où chaque caisson (36) est de révolution, est disposé du côté opposé au conduit d'éjection primaire (20) par rapport à la peau (32) et prend la forme d'une couronne coaxiale avec l'axe longitudinal X où l'ouverture est orientée vers l'axe longitudinal X.

4. Tuyère primaire (22) selon la revendication 3, **caractérisée en ce que** chaque caisson (36) présente des trous (48) au voisinage du fond (42) et **en ce que** chaque languette (40a-b) présente des trous (50) au voisinage de l'ouverture.

5. Turbomachine comprenant une tuyère primaire (22) selon l'une des revendications 3 ou 4 et une structure interne (24) où la tuyère primaire (22) délimite à l'extérieur un conduit d'éjection primaire (20) et où la structure interne (24) délimite à l'intérieur ledit conduit d'éjection primaire (20).

6. Aéronef (10) comportant au moins une turbomachine selon la revendication 5.
